(19) Europäisches Patentamt
European Patent Office
Office européen des brevets

(11) Veröffentlichungsnummer: **0 347 548 A1**

(12) **EUROPÄISCHE PATENTANMELDUNG**

(21) Anmeldenummer: **89107105.2**

(22) Anmeldetag: **20.04.89**

(51) Int. Cl.4: **C08G 73/16**

Die Bezeichnung der Erfindung wurde geändert (Richtlinien für die Prüfung im EPA, A-III, 7.3).

(30) Priorität: **03.05.88 DE 3814974**

(43) Veröffentlichungstag der Anmeldung: **27.12.89 Patentblatt 89/52**

(84) Benannte Vertragsstaaten: **DE FR GB IT**

(71) Anmelder: **BAYER AG**

**D-5090 Leverkusen 1 Bayerwerk(DE)**

(72) Erfinder: **Dicke, Hans-Rudolf, Dr.**
**Kaiserswerther Strasse 48**
**D-4150 Krefeld 12(DE)**
Erfinder: **Genz, Joachim, Dr.**
**Bodelschwinghstrasse 16**
**D-4150 Krefeld 1(DE)**
Erfinder: **Eckhardt, Volker, Dr.**
**Bodelschwinghstrasse 14**
**D-4150 Krefeld(DE)**
Erfinder: **Bottenbruch, Ludwig, Dr.**
**Woehlerstrasse 5**
**D-4150 Krefeld(DE)**

(54) **Thermotrope Polyesterimide mit verbesserter Wärmebeständigkeit, Verfahren zu ihrer Herstellung und ihre Verwendung.**

(57) Thermotrope Polyesterimide mit wiederkehrenden Struktureinheiten der Formeln

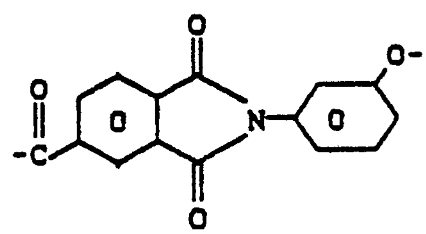

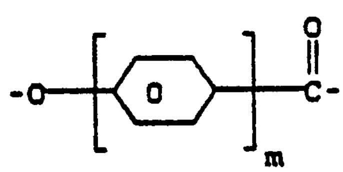

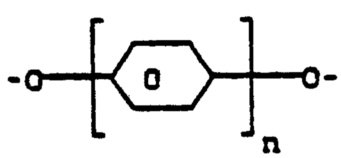

und

EP 0 347 548 A1

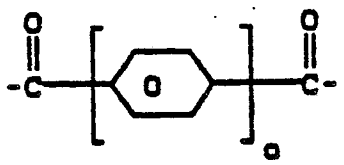

,

worin
m, n und o die Werte 1 und 2 annehmen können,
besitzen eine ausgezeichnete Wärmeformbeständigkeit und dienen zur Herstellung von Formkörpern, Filamenten, Fasern und Folien.

# Thermotrope Polyesterimide mit ausgezeichneter Wärmeformbeständigkeit, Verfahren zu ihrer Herstellung und ihre Verwendung zur Herstellung von Formkörpern, Filamenten, Fasern und Folien

Die Erfindung betrifft hochmolekulare thermotrope Polyesterimide mit ausgezeichneter Wärmeformbeständigkeit, ein Verfahren zu ihrer Herstellung und ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polykondensate sind hinreichend bekannt. Eine Literaturzusammenfassung befindet sich z.B. in der Deutschen Patentanmeldung P 37 37 067, der DE-OS 33 25 787 und der EP-OS 134 959. Dort wird auch eine Untersuchungsmethode für den flüssigkristallinen Zustand von Polymerschmelzen beschrieben.

Formkörper, die aus flüssigkristalliner Schmelze vollaromatischer Polykondensate hergestellt werden, weisen mechanische Festigkeiten und Steifigkeiten auf, wie sie normalerweise bei unverstärkten, aus isotroper Schmelze verarbeiteten Polykondensaten nicht gefunden werden. Zur Synthese von thermotropen Polykondensaten werden üblicherweise solche Monomere eingesetzt, die zu starren, stäbchenförmigen Makromolekülen oder Makromolekülsegmenten führen. So wurden z.B. flüssigkristalline Polyester aus p-Hydroxybenzoesäure, Resorcin und Terephthalsäure (vgl. z.B. DE-OS 2 025 971), aus 2-Hydroxy-6-naphthoesäure und p-Hydroxybenzoesäure (vgl. z.B. EP 22 344) oder aus p-Hydroxybenzoesäure, 2,6-Dihydroxynaphthalin und Terephthalsäure (vgl. z.B. EO 1 340) beschrieben. Diese Produkte sind thermoplastisch verarbeitbar, sie weisen jedoch den Nachteil auf, daß ihre Wärmeformbeständigkeit relativ niedrig, d.h. unterhalb von 160 °C liegt. Andererseits sind auch flüssigkristalline Polyester mit höherer Wärmeformbeständigkeit bekannt geworden, so z.B. aus p-Hydroxybenzoesäure, Isophthalsäure, Hydrochinon und Bisphenol-A (vgl. z.B. EP 88 742). Der Nachteil dieser Produkte besteht allerdings darin, daß mit zunehmender Wärmeformbeständigkeit auch die Verarbeitungstemperatur deutlich ansteigt, und daß bei Wärmeformbeständigkeiten oberhalb von 160 °C die für die thermoplastische Verarbeitung notwendigen Temperaturen weit oberhalb 300 °C, in der Regel sogar oberhalb 330 °C liegen. Ein weiterer Nachteil der bisher bekannt gewordenen flüssigkristallinen Polyester ist deren geringe Oberflächen- und Abriebfestigkeit.

Die Aufgabe der vorliegenden Erfindung bestand daher darin, thermoplastisch verarbeitbare flüssigkristalline Polykondensate bereitzustellen, die eine hohe Wärmeformbeständigkeit aufweisen, bei niedrigen Temperaturen aus flüssigkristalliner Schmelze verarbeitbar sind, und die darüber hinaus eine hohe Oberflächen- und Abriebfestigkeit besitzen. Bevorzugte neue thermotrope Polykondensate sollten eine Wärmeformbeständigkeit von mehr als 150 °C, vorzugswiese von mehr als 160 °C aufweisen und sollten unterhalb von 330 °C, vorzugsweise unterhalb von 300 °C und besonders bevorzugt unterhalb von 290 °C eine flüssigkristalline Schmelzphase ausbilden.

Überraschenderweise wurde nun gefunden, daß Polyesterimide, die einkondensierte Reste von N-(3-Hydroxyphenyl)-trimellitsäureimid, aromatischen Hydroxycarbonsäuren, aromatischen Dihydroxyverbindungen und aromatischen Dicarbonsäuren enthalten, die gewünschte Kombination vorteilhafter Eigenschaften besitzen.

Gegenstand der Erfindung sind thermotrope Polyesterimide mit wiederkehrenden Struktureinheiten der Formeln

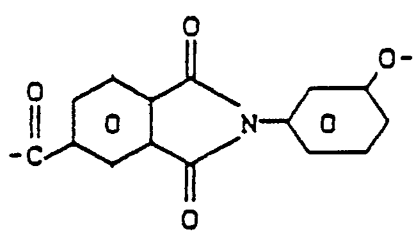

(I)

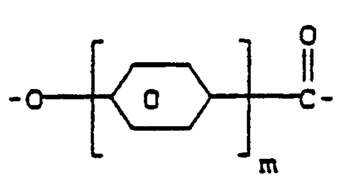

(II)

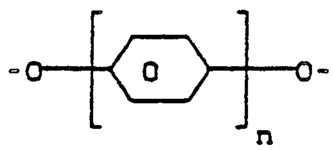

(III)

und

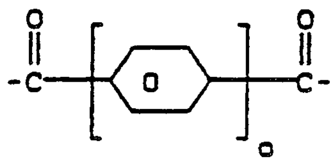

(IV),

wobei die Polyesterimide die einkondensierten Reste

(I) in einer Menge von 5 bis 50 Mol-%, vorzugsweise von 8 bis 45 Mol-%, besonders bevorzugt von 10 bis 40 Mol-% und

(II) in einer Menge von 10 bis 75 Mol-%, bevorzugt 15 bis 73 Mol-%, besonders bevorzugt 20 bis 70 Mol-%, bezogen auf die Summe der einkondensierten Reste (I), (II), (III) und (IV) enthalten, und wobei das Molverhältnis der einkondensierten Reste (III)/(IV) 0,95 bis 1,05 beträgt, mit der Maßgabe, daß die Gesamtkonzentration der einkondensierten Reste (I) und (II) 10 bis 85 Mol-%, bevorzugt 30 bis 80 Mol-%, bezogen auf die Summe der einkondensierten Reste (I) bis (IV) beträgt, und worin

m, n und o die Werte 1 und 2 annehmen können.

Die Struktureinheit (I) ist abgeleitet von N-(3-Hydroxyphenyl)-trimellitsäureimid oder deren reaktiven Derivaten, wie die Arylester oder Acylester. Die Herstellung von N-(3-Hydroxyphenyl)-trimellitsäureimid kann nach literaturbekannten Methoden aus m-Aminophenol und Trimellitsäureanhydrid erfolgen (vgl. K. Kwita und S. Matsuda, Makromol, Chem., 184, 1223 (1983)).

Die Struktureinheit (II) ist abgeleitet von p-Hydroxybenzoesäure und/oder 4-Hydroxy-4′-biphenylcarbonsäure oder deren reaktiven Derivaten, wie die Arylester oder Acylester.

Die Struktureinheit (III) ist abgeleitet von Hydrochinon und/oder 4,4′-Dihydroxydiphenyl oder deren reaktiven Derivaten, wie beispielsweise die Acylester.

Die Struktureinheit (IV) ist abgeleitet von Terephthalsäure und/oder 4,4′-Biphenyldicarbonsäure oder deren reaktiven Derivaten, wie die Arylester.

Die erfindungsgemäßen Polyesterimide können die Einheiten aus den Resten (I) und (II) in statistischer Verteilung oder in Blöcken enthalten. Es ist allerdings zu beachten, daß längere Blöcke dieser Einheiten die Schmelzviskosität und den Schmelzpunkt der resultierenden Produkte stark erhöhen können.

Als Endgruppen können die erfindungsgemäßen Polyesterimide -COOH, -H, -OH, $-OC_6H_5$, Acyloxy oder von Kettenabbrechern herrührende Reste enthalten. Bevorzugte

Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol und aromatische Monocarbonsäuren, wie Diphenylcarbonsäuren und Naphthalincarbonsäuren. Kettenabbrecher können in Mengen von ca. 0,1 bis 10, bevorzugt 0,5 bis 5 Mol-%, bei Carbonsäuren bezogen auf die Summe der Reste I, II und IV, bei Phenolen bezogen auf die Reste I, II und III, eingesetzt werden.

Es können auch verzweigende drei- oder höherfunktionelle - vorzugsweise aromatische - Monomere in Mengen von ca. 0,1 bis 2,0, bevorzugt 0,2 bis 1,0 Mol-%, bezogen auf die Summe der Reste I, II und III, wie Phloroglucin, 1,3,5-Benzoltricarbonsäure und/oder 3,5-Dihydroxybenzoesäure, eingesetzt werden.

Die erfindungsgemäßen Polyesterimide sind in den von uns erprobten Lösungsmitteln, wie p-Chlorphenol oder Phenol/1,1,2,2-Tetrachlorethan (1:1-Gewichtsverhältnis) unlöslich.

Die erfindungsgemäßen Polyesterimide besitzen vorzugsweise eine Schmelzviskosität von weniger als 1000 Pa.s, bevorzugt 10 bis 500 Pa.s, gemessen bei einer Schergeschwindigkeit von $10^3 sec^{-1}$ unter Verwendung einer Düse mit einem Länge/Durchmesserverhältnis von 20 bei einer Temperatur von weniger als 330 °C.

Die erfindungsgemäßen Polyesterimide können nach verschiedenen Verfahren hergestellt werden, z.B. durch Kondensation bzw. Umesterung der von den Resten I, II, III und IV abgeleiteten Hydroxycarbonsäuren, Diphenolen sowie Dicarbonsäure oder ihrer reaktionsfähigen Derivate und anschließende Polykondensation (vgl. R.W. Lenz, "Synthetic routes to liquid crystalline polymers" in: Recent Advances in Liquid Crystalline Polymers, Elseview, New York, 1985).

Beispiele für bevorzugte Ausgangsverbindungen sind ihre Arylester und ihre Acylester.

Nach einem bevorzugten Syntheseverfahren werden die niederen Acylester, vorzugsweise die Acetate der von den Resten (I) und (II) abgeleiteten Hydroxycarbonsäuren sowie der von den Resten III abgeleiteten Diphenole mit von den Resten IV abgeleiteten Dicarbonsäuren umgesetzt, wobei die Acylester auch in situ hergestellt werden können.

Nach einem weiteren bevorzugten Syntheseverfahren werden die von den Resten I abgeleiteten Hydroxycarbonsäuren durch Umsetzung von Trimellitsäureanhydrid und 3-Aminophenol in situ erzeugt, acetyliert und ohne wietere Isolierung mit den niederen Acylestern, vorzugsweise den Acetaten, der von den Resten II abgeleiteten Hydroxycarbonsäuren sowie der von den Resten III abgeleiteten Diphenole und den von den Resten IV abgeleiteten Dicarbonsäuren umgesetzt.

Diese Reaktionen können in der Schmelzphase durchgeführt werden; möglich ist jedoch auch die Reaktion in Gegenwart eines flüssigen, wärmeüberleitenden Mediums, das einen hohen Siedepunkt hat (vgl. DE-OS 20 25 971).

Die Reste I, II, III und IV werden im Verhältnis der Ausgangskomponenten in den Polyester eingebaut.

Es kann zweckmäßig sein, sowohl die Kondensations- bzw. Umesterungsreaktionen als auch die Polykondensationsreaktionen katalytisch zu beschleunigen. Derartige Katalysatoren sind bekanntlich z.B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie Magnesium, Calcium; der Nebengruppenelemente, wie Vanadium, Titan, Mangan, Cobalt, Nickel, Zink, Lanthan, Cer, Zirkonium oder der Elemente aus anderen Gruppen des Periodensystems, wie Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutylzinn-diacetat, Dibutyl-dimethoxy-zinn.

Die Katalysatormengen betragen vorzugsweise ca. 0,001 bis 1, insbesondere 0,01 bis 0,2 Gew.-%, bezogen auf das Gesamtgewicht der eingesetzten Monomeren.

Die erfindungsgemäßen Polyesterimide können bei Temperaturen von etwa 150 bis 380 °C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann - in Granulat - oder Pulverform - einer Festphasennachkondensation unter vermindertem Druck bei Temperaturen von ca. 150 bis 300 °C, bevorzugt 200 bis 250 °C, unterworfen werden; nach 1 bis 25 Stunden haben sich das Molekulargewicht erhöht und die daraus resultierenden Eigenschaften des Polyesterimides merklich verbessert.

Weiterer Gegenstand der Erfindung ist also ein Verfahren zur Herstellung der neuen Polyesterimide durch Umsetzung der von den Resten I abgeleiteten Hydroxycarbonsäure - die auch in situ aus Trimellitsäureanhydrid und 3-Aminophenol erzeugt werden können - mit von den Resten II abgeleiteten Hydroxycarbonsäuren und mit dem von den Resten III abgeleiteten Diphenole bzw. deren reaktiven Derivaten - die ebenfalls in situ erzeugt werden können - sowie von den Resten IV abgeleiteten Dicarbonsäure gegebenenfalls in Gegenwart von Katalysatoren, Kettenabbrechern und Verzweigungsmitteln, bei Temperaturen von 150 bis 380 °C, gegebenenfalls unter vermindertem Druck.

Die erfindungsgemäßen thermotropen Polyesterimide können infolge ihrer relativ geringen Schmelzviskosität vorteilhaft aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Desweiteren zeigen sie eine ausgeprägte Strukturviskosität, d.h., daß die Schmelzviskosität bei Erhöhung der Scherkräfte stark abfällt. Geeignete Verarbeitungsverfahren sind Spritzguß, Extrusion, Pultrusion, Pressen, Thermoformen und Schmelzspinnen.

Aus den erfindungsgemäßen Polyesterimiden können Formteile hoher Festigkeit und Steifigkeit, guter Zähigkeit

- insbesondere im Bereich tiefer Temperaturen -, hoher Bruchdehnung und großer Dimensionsstabilität hergestellt werden. Da die Polyesterimide weiterhin hohe Chemikalienresistenz und gute Flammwidrigkeit aufweisen, eignen sie sich bevorzugt zur Herstellung von

- Umhüllungen von Lichtwellenleitern,
- elektrotechnischen Artikeln, wie Isolatoren, Leiterplatten für gedruckte Schaltungen, Steckkontakten, Umhüllungen für integrierte Schaltungen, Armaturenteilen,

- Teilen chemisch-technischer Anlagen, wie Rohren, Behälterauskleidungen, Rotoren, Gleitlagern, Dichtungen, Füllkörpern,
- Teilen medizinisch-technischer Geräte und Bauteilen von Klimaanlagen sowie Ventilteilen.

Die erfindungsgemäßen Polyesterimide können aber auch als Überzugs- und Beschichtungsmaterial (pulverförmig oder dispergiert) verwendet werden. Auch zur Herstellung verstärkter oder gefüllter Formmassen mit einem Verstärker- und/oder Füllstoffgehalt von 5 bis 65 Gew.-%, bezogen auf verstärkte und oder gefüllte Formmassen, sind sie bestens geeignet.

Weiterer Gegenstand der Erfindung ist also die Verwendung der neuen Polyesterimide zur Herstellung von Formkörpern, Filamenten, Fasern und Filmen.

## Beispiele:

Die Untersuchung auf thermotropes flüssigkristallines Verhalten erfolgte nach dem in der DE-OS 33 25 787 beschriebenen Verfahren. Zur Bestimmung der Wärmeformbeständigkeit wurde die HDT-A-Temperatur an Rechteckstäben (80 mm x 10 mm x 4 mm) gemäß DIN 53 461 (ISO 75) vorgenommen (Belastung: 181,5 N/mm$^2$).

## Beispiel 1

In diesem Beispiel wird die Herstellung von N-(3-Hydroxyphenyl)-trimellitsäureimid beschrieben.

In einen 6-l-Dreihalskolben mit KPG-Rührer, Rückflußkühler, Thermometer und Stickstoffeinleitung wurden die folgenden Substanzen eingewogen:

| | |
|---|---|
| 190,75 g | m-Aminophenol |
| 403,2 g | Trimellitsäureanhydrid |
| 3150 g | Essigsäure |

Unter Rühren wurde im Verlauf von 2 Stunden bis zum Rückfluß erhitzt. Nach weiteren 4 Stunden unter Rückfluß wurde abgekühlt und der Ansatz in 6 l Eiswasser geschüttet. Das ausgefallene Produkt wurde abgesaugt, mit heißem Wasser sowie heißem Isopropanol gewaschen und dann getrocknet. Erhalten wurde eine gelb-grün, feinkristalline Masse. Die Ausbeute betrug 432,2 g = 87,3 % der Theorie. Die Bestimmung der Säurezahl ergab einen Wert von 196 bis 201 (Theorie 198).

## Beispiel 2

Herstellung eines erfindungsgemäßen Polyesterimides aus N-(3-Hydroxyphenyl)-trimellitsäureimid, p-Hydroxybenzoesäure, 4,4′-Dihydroxydiphenyl und Terephthalsäure.

In einen 1-l-Dreihalskolben mit Rührer, Destillationsaufsatz und Stickstoff-Einleitung wurden die folgenden Substanzen eingewogen:

| | | |
|---|---|---|
| 65,75 | g = | 0,232 Mol N-(3-Hydroxyphenyl)-trimellitsäureimid |
| 192,79 | g = | 1,394 Mol p-Hydroxybenzoesäure |
| 115,78 | g = | 0,697 Mol Terephthalsäure |
| 129,77 | g = | 0,697 Mol 4,4′-Dihydroxydiphenyl |
| 339,16 | g = | 3,32 Mol Acetanhydrid |
| 0,225 | g | Germaniumdioxid |
| 0,225 | g | Hydrochinonsulfonsäure-K-Salz |

Nach mehrmaligem Evakuieren und Belüften mit Stickstoff wurde die Apparatur im Verlauf von 30 Minuten auf 170 °C aufgeheizt. Im Verlauf von weiteren 4 Stunden wurde die Temperatur stufenweise bis auf 320 °C erhöht. Bei dieser Temperatur wurde Vakuum angelegt und der Druck kontinuierlich bis auf 0,8

mbar reduziert. Nach 25 Minuten bei diesem Vakuum wurde das Heizbad entfernt und das Produkt nach dem Abkühlen durch Zerschlagen des Kolbens isoliert. Erhalten wurde ein hellbeiges, faseriges Polyesterimid. Dieses Produkt war in allen untersuchten Lö sungsmitteln, wie z.B. p-Chlorphenol oder Phenol/1,1,2,2-Tetrachlorethan (Gewichtsverhältnis 1:1) unlöslich.

Polarisationsmikroskopisch wurde eine anisotrope Schmelzphase oberhalb 260°C beobachtet. Mittels einer Arburg-Spritzgießmaschine vom Typ 170 Mini wurden bei einer Massetemperatur von 310°C und einer Formtemperatur von 130°C Prüfkörper hergestellt und anschließend 10 h bei 200°C gelagert. Die HDT-A-Temperatur dieses Polyesterimids lag bei 206°C. Folgende mechanische Eigenschaften wurden ermittelt:

$a_n$ (IZOD, ISO 180 Methode 1c): 23,2 KJ • $m^{-2}$ (Schlagzähigkeit)
$E_B$: 9940 MPa (Biege-E-Modul)
$\sigma_B$: 152 MPa (Biegefestigkeit)

Beispiele 3 bis 5

In der in Beispiel 2 beschriebenen Apparatur und nach dem dort erläuterten Verfahren wurden wietere thermotrope Polyesterimide hergestellt. Die Zusammensetzungen der Produkte sowie die Ergebnisse der HDT-A- und polarisationsmikroskopischen Untersuchung sind in den folgenden Tabellen aufgeführt:

| Beispiel | N-HTS[1] | pHB[2] | DOD[3] | TS[4] | HDT-A | anisotrope Schmelze |
|---|---|---|---|---|---|---|
| | | [Mol-%] | | | (°C) | |
| 3 | 10 | 70 | 20 | 20 | 195 | >255°C |
| 4 | 20 | 50 | 30 | 30 | 169 | >240°C |
| 5 | 30 | 40 | 30 | 30 | 168 | >235°C |
| 6 | 40 | 20 | 40 | 40 | 168 | >270°C |
| 7 | 40 | 30 | 30 | 30 | 168 | >280°C |
| 8 | 40 | 40 | 20 | 20 | 160 | >260°C |

1 N-HTS = N-(3-Hydroxyphenyl)-trimellitsäureimid
2 pHB = p-Hydroxybenzoesäure
3 DOD = 4,4'-Dihydroxydiphenyl
4 TS = Terephthalsäure

| Beispiel | $a_n$ IZOD nach ISO 180 Methode 1c ($KJ/m^{-2}$) | $E_B$ (MPa) | $\sigma_B$ (MPa) |
|---|---|---|---|
| 3 | 36,4 | 10 170 | 169 |
| 4 | 32,6 | 10 770 | 193 |
| 5 | 44,0 | 10 750 | 218 |
| 6 | 16,5 | 6 370 | 129 |
| 7 | 25,1 | 10 000 | 196 |
| 8 | 16,4 | 8 560 | 152 |

## Ansprüche

1. Thermotrope Polyesterimide mit wiederkehrenden Struktureinheiten der Formeln

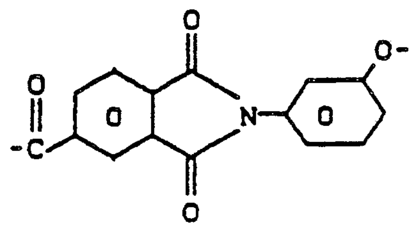

(I)

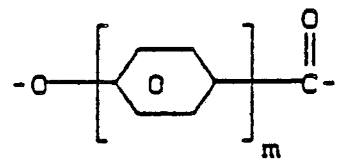

(II)

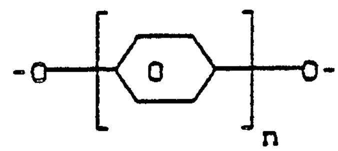

(III)

und

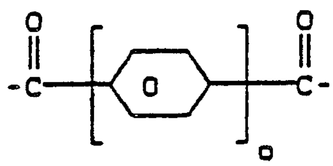

(IV),

wobei die Polyesterimide die einkondensierten Reste
(I) in einer Menge von 5 bis 50 Mol-% und
(II) in einer Menge von 10 bis 75 Mol-%,
bezogen auf die Summe der einkondensierten Reste (I) bis (IV) enthalten, und wobei das Molverhältnis der einkondensierten Reste (III)/(IV) 0,95 bis 1,05 beträgt, mit der Maßgabe, daß die Gesamtkonzentration der einkondensierten Reste (I) und (II) 10 bis 85 Mol-%, bezogen auf die Summe der einkondensierten Reste (I) bis (IV) beträgt, und worin
m, n und o die Werte 1 und 2 annehmen können.

2. Polyesterimide nach Anspruch 1, dadurch gekennzeichnet, daß sie die einkondensierten Reste
(I) in einer Menge von 8 bis 45 Mol-%,
bezogen auf die Summe der einkondensierten Reste (I) bis (IV) enthalten.

3. Polyesterimide nach Ansprüchen 1 und 2, dadurch gekennzeichnet, daß sie die einkondensierten Reste
(I) in einer Menge von 10 bis 40 Mol-%,
bezogen auf die Summe der einkondensierten Reste (I) bis (IV) enthalten.

4. Polyesterimide nach Ansprüchen 1 bis 3, dadurch gekennzeichnet, daß sie die einkondensierten Reste
(II) in einer Menge von 20 bis 70 Mol-%,
bezogen auf die Summe der einkondensierten Reste (I) bis (IV) enthalten.

5. Polyesterimide nach Ansprüchen 1 bis 4, dadurch gekennzeichnet, daß m und o = 1 und n = 2 sind.

6. Verfahren zur Herstellung der neuen Polyesterimide nach Ansprüchen 1 bis 5, dadurch gekennzeichnet, daß man die von dem Rest (I) abgeleitete Hydroxycarbonsäure oder deren reaktive Derivate mit den von Rest (II) abgeleiteten Hydroxycarbonsäuren oder deren reaktive Derivate sowie mit den von den Resten (III) und (IV) abgeleiteten Diphenolen und Dicarbonsäuren oder deren reaktiven Derivate gegebenenfalls in Gegenwart von Katalysatoren, Kettenabbrechern und Verzweigungsmitteln bei Temperaturen von 150 bis 380° C, gegebenenfalls unter vermindertem Druck, umsetzt.

7. Verfahren nach Anspruch 6, dadurch gekennzeichnet, daß sich eine Festphasennachkondensation anschließt.

8. Verwendung der Polyesterimide nach Ansprüchen 1 bis 5 zur Herstellung von Formkörpern, Filamenten, Fasern und Folien.

9. Formmassen auf Basis der Polyesterimide nach Ansprüchen 1 bis 5, dadurch gekennzeichnet, daß sie 5 bis 65 Gew.-% eines Verstärkungs- und/oder Füllstoffes, bezogen auf die verstärkte und/oder gefüllte Formmasse, enthalten.

Europäisches Patentamt

# EUROPÄISCHER RECHERCHENBERICHT

Nummer der Anmeldung

EP 89 10 7105

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 076 483 (DU PONT) --- | | C 08 G 73/16 |
| A | EP-A-0 084 256 (DU PONT) --- | | |
| A | EP-A-0 171 707 (BAYER) --- | | |
| A | EP-A-0 213 609 (IDEMITSU) --- | | |
| A | PATENT ABSTRACTS OF JAPAN, band 7, Nr. 155 (C-175)[1300], 7. Juli 1983; & JP-A-58 67 725 (MITSUI TOATSU KAGAKU K.K.) 22-04-1983 --- | | |
| A | PATENT ABSTRACTS OF JAPAN, Band 3, Nr. 109 (C-58), 12. September 1979, Seite 117 C 58; & JP-A-54 88 996 (TOYO BOSEKI K.K.) 14-07-1979 ----- | | |
| | | | RECHERCHIERTE SACHGEBIETE (Int. Cl.4) |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 14-07-1989 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)